# EUROPEAN PATENT APPLICATION

(11) **EP 4 625 972 A1**
(43) Date of publication of application: **01.10.2025**
(21) Application number: 25166208.6
(22) Date of filing: 26.03.2025
(51) Int. Cl.: H04N 9/31

(54) **METHOD OF AND SYSTEM FOR ELECTRONIC MOTTLING COMPENSATION**

(30) Priority: 26.03.2024 US 202463569903 P
(71) Applicant: CAE Inc., Saint Laurent, QC H4T 1G6 (CA)
(72) Inventor: PEREY, Philippe, SAINT-LAURENT, H4T 1G6 (CA)
(74) Representative: IXAS Conseil

(57) **Abstract**

A method for generating a digital filter for adjusting a brightness of a screen, the method being executed by a processor, the method comprising: receiving a captured image of a screen on which a reference image is projected by a projector, the captured image being captured by a camera; applying a spatial frequency filter to the captured image, thereby obtaining a spatially filtered image; determining a projector-space compensation filter based on the spatially filtered image, the projector-space compensation filter being configured for adjusting a brightness of the acquired image; and outputting the projector-space compensation filter.

## Description

### CROSS-REFERENCE TO RELATED APPLICATIONS

The present application claims priority on U.S. Provisional Patent Application No. 63/569,903 filed on March 26, 2024.

### FIELD

The present technology relates to systems and systems for projecting images on a screen in general and more specifically to methods, systems and non-transitory storage mediums for adjusting the brightness of an image projected on a screen.

### BACKGROUND

Most visual displays in simulators involve a rear-projection display layout where projectors display a picture on a semi-transparent surface which is then seen directly (or indirectly via a mylar mirror) by the users of the simulator.

The semi-transparent surface is usually a transparent acrylic base painted surface with multiple coats or layers of specialized paint to obtain the right reflectance, directionality, and transmissivity for the image. These coats of paint must be uniform so that variations in paint thickness and optical properties are minimal. As such, robotic painting arms are usually used to ensure a consistent application. Even with such processes, the limit of uniformity is typically about 3% of brightness variation (referred to as mottling). With traditional displays having lower contrast, such a brightness variation may be acceptable and not produce distracting artifacts to the users of the simulator while training.

However, there are optimized paint coating processes that produce better overall display contrast, and such a high contrast results in mottling being visible to the users, potentially distracting the users.

Therefore, there is a need for a method and system for adjusting the brightness of an image projected on a screen.

### SUMMARY

It is an object of the present technology to ameliorate at least some of the inconveniences present in the prior art. One or more implementations of the present technology may provide and/or broaden the scope of approaches to and/or methods of achieving the aims and objects of the present technology.

According to a first broad aspect, there is provided a method for generating a digital filter for adjusting a brightness of a screen, the method being executed by a processor, the method comprising: receiving a captured image of a screen on which a reference image is projected by a projector, the captured image being captured by a camera; applying a spatial frequency filter to the captured image, thereby obtaining a spatially filtered image; determining a projector-space compensation filter based on the spatially filtered image, the projector-space compensation filter being configured for adjusting a brightness of the acquired image; and outputting the projector-space compensation filter.

In some embodiments, the step of determining the projector-space compensation filter comprises: determining a screen-space compensation filter based on the spatially filtered image, the screen-space compensation filter being configured for said adjusting the brightness of the acquired image; and mapping the screen-space compensation filter onto a projector space, thereby obtaining the projector-space compensation filter.

In some embodiments, the step of applying the spatial frequency filter to the captured image comprises applying a high pass filter to the captured image.

In some embodiments, the step of determining the screen-space compensation filter comprises one of: determining a first intensity for each pixel of the spatially filtered image, thereby obtaining a first intensity map of the spatially filtered image; determining a greatest negative deviation amongst the first intensities; subtracting the greatest negative deviation from the first intensity map, thereby obtaining a second intensity map of the spatially filtered image; and inverting intensity values of the second intensity map, thereby obtaining the screen-space compensation filter; and determining a first intensity for each pixel of the spatially filtered image, thereby obtaining a first intensity map of the spatially filtered image; inverting the first intensity of the first intensity map, thereby obtaining a second intensity map for the spatially filtered image; determining a greatest positive deviation within the second intensity map; and subtracting the greatest positive deviation from the second intensity map, thereby obtaining the screen-space compensation filter.

In some embodiments, the step of applying the spatial frequency filter to the captured image comprises applying a low pass filter to the captured image.

In some embodiments, the step of determining the screen-space compensation filter comprises: determining a first intensity for each pixel of the captured image, thereby a first intensity map; determining a second intensity for each pixel of the spatially filtered image, thereby obtaining a second intensity map; determining a greatest positive deviation between the first intensity map and the second intensity map; subtracting the greatest positive deviation from the second intensity map, thereby obtaining a third intensity map; subtracting the third intensity map from the first intensity map, thereby obtaining a fourth intensity map; and inverting intensity values of the fourth intensity map, thereby obtaining the screen-space compensation filter.

In some embodiments, the step of applying a spatial frequency filter to the captured image comprises: mapping the captured image from a screen space onto a projector space, thereby obtaining a mapped image; and applying the spatial frequency filter to the mapped image, thereby obtaining the spatially filtered image.

In some embodiments, the step of applying the spatial frequency filter to the mapped image comprises applying a high pass filter to the mapped image.

In some embodiments, the step of determining the projector-space compensation filter comprises one of: determining a first intensity for each pixel of the spatially filtered image, thereby obtaining a first intensity map of the spatially filtered image; determining a greatest negative deviation amongst the first intensities; subtracting the greatest negative deviation from the first intensity map, thereby obtaining a second intensity map of the spatially filtered image; and inverting intensity values of the second intensity map, thereby obtaining the projector-space compensation filter; and determining a first intensity for each pixel of the spatially filtered image, thereby obtaining a first intensity map of the spatially filtered image; inverting the first intensity of the first intensity map, thereby obtaining a second intensity map for the spatially filtered image; determining a greatest positive deviation within the second intensity map; and subtracting the greatest positive deviation from the second intensity map, thereby obtaining the projector-space compensation filter.

In some embodiments, the step of applying the spatial frequency filter to the mapped image comprises applying a low pass filter to the mapped image.

In some embodiments, the step of determining the projector-space compensation filter comprises: determining a first intensity for each pixel of the mapped image, thereby a first intensity map; determining a second intensity for each pixel of the spatially filtered image, thereby obtaining a second intensity map; determining a greatest positive deviation between the first intensity map and the second intensity map; subtracting the greatest positive deviation from the second intensity map, thereby obtaining a third intensity map; subtracting the third intensity map from the first intensity map, thereby obtaining a fourth intensity map; and inverting intensity values of the fourth intensity map, thereby obtaining the projector-space compensation filter.

In some embodiments, the step of outputting comprises one of: transmitting the projector-space compensation filter to the projector; transmitting the projector-space compensation filter to an image generator, the image generator being configured for generating images to be projected by the projector; and transmitting the projector-space compensation filter to an optical filter positioned in front of the projector, the optical filter being configured for pixel-selectively adjusting light intensity.

In some embodiments, the method further comprises determining a transform from a screen space to the projector space.

In some embodiments, the reference image comprises a patterned image having at least two different colors, the step of determining the transform being performed based on the reference image.

In some embodiments, the reference image comprises a monochromatic image, said determining the transform comprising: receiving an acquired image of a screen on which a patterned image is projected by the projector; and determining the transform based on the acquired image.

In some embodiments, the method further comprises controlling the camera for capturing the acquired image.

In some embodiments, the method further comprises transmitting the reference image to the projector.

In some embodiments, the method further comprises controlling the projector for projecting the reference image on the screen.

According to a second broad aspect, there is provided a computer program product comprising a computer readable memory storing computer executable instructions thereon that when executed by at least one processor perform the steps of the above-described method.

According to another broad aspect, there is provided a computer program product comprising a computer readable memory storing computer executable instructions thereon that when executed by at least one processor perform at least some of the above-described method steps.

According to a further broad aspect, there is provided a system for generating a digital filter for adjusting a brightness of a screen, the system comprising: a processor; a non-transitory storage medium operatively connected to the processor, the non-transitory storage medium comprising computer-readable instructions; the processor, upon executing the instructions, being configured for: receiving a captured image of a screen on which a reference image is projected by a projector, the captured image being captured by a camera; applying a spatial frequency filter to the captured image, thereby obtaining a spatially filtered image; determining a projector-space compensation filter based on the spatially filtered image, the projector-space compensation filter being configured for adjusting a brightness of the acquired image; and outputting the projector-space compensation filter.

In some embodiments, the processor is configured for: determining a screen-space compensation filter based on the spatially filtered image, the screen-space compensation filter being configured for said adjusting the brightness of the acquired image; and mapping the screen-space compensation filter onto a projector space, thereby obtaining the projector-space compensation filter.

In some embodiments, the processor is configured for applying a high pass filter to the captured image.

In some embodiments, the processor is configured for one of: determining a first intensity for each pixel of the spatially filtered image, thereby obtaining a first intensity map of the spatially filtered image; determining a greatest negative deviation amongst the first intensities; subtracting the greatest negative deviation from the first intensity map, thereby obtaining a second intensity map of the spatially filtered image; and inverting intensity values of the second intensity map, thereby obtaining the screen-space compensation filter; and determining a first intensity for each pixel of the spatially filtered image, thereby obtaining a first intensity map of the spatially filtered image; inverting the first intensity of the first intensity map, thereby obtaining a second intensity map for the spatially filtered image; determining a greatest positive deviation within the second intensity map; and subtracting the greatest positive deviation from the second intensity map, thereby obtaining the screen-space compensation filter.

In some embodiments, the processor is configured for applying a low pass filter to the captured image.

In some embodiments, the processor is configured for: determining a first intensity for each pixel of the captured image, thereby a first intensity map; determining a second intensity for each pixel of the spatially filtered image, thereby obtaining a second intensity map; determining a greatest positive deviation between the first intensity map and the second intensity map; subtracting the greatest positive deviation from the second intensity map, thereby obtaining a third intensity map; subtracting the third intensity map from the first intensity map, thereby obtaining a fourth intensity map; and inverting intensity values of the fourth intensity map, thereby obtaining the screen-space compensation filter.

In some embodiments, the processor is configured for: mapping the captured image from a screen space onto a projector space, thereby obtaining a mapped image; and applying the spatial frequency filter to the mapped image, thereby obtaining the spatially filtered image.

In some embodiments, the processor is configured for applying a high pass filter to the mapped image.

In some embodiments, the processor is configured for one of: determining a first intensity for each pixel of the spatially filtered image, thereby obtaining a first intensity map of the spatially filtered image; determining a greatest negative deviation amongst the first intensities; subtracting the greatest negative deviation from the first intensity map, thereby obtaining a second intensity map of the spatially filtered image; and inverting intensity values of the second intensity map, thereby obtaining the projector-space compensation filter; and determining a first intensity for each pixel of the spatially filtered image, thereby obtaining a first intensity map of the spatially filtered image; inverting the first intensity of the first intensity map, thereby obtaining a second intensity map for the spatially filtered image; determining a greatest positive deviation within the second intensity map; and subtracting the greatest positive deviation from the second intensity map, thereby obtaining the projector-space compensation filter.

In some embodiments, the processor is configured for applying a low pass filter to the mapped image.

In some embodiments, the processor is configured for: determining a first intensity for each pixel of the mapped image, thereby a first intensity map; determining a second intensity for each pixel of the spatially filtered image, thereby obtaining a second intensity map; determining a greatest positive deviation between the first intensity map and the second intensity map; subtracting the greatest positive deviation from the second intensity map, thereby obtaining a third intensity map; subtracting the third intensity map from the first intensity map, thereby obtaining a fourth intensity map; and inverting intensity values of the fourth intensity map, thereby obtaining the projector-space compensation filter.

In some embodiments, the processor is configured for one of: transmitting the projector-space compensation filter to the projector; transmitting the projector-space compensation filter to an image generator, the image generator being configured for generating images to be projected by the projector; and transmitting the projector-space compensation filter to an optical filter positioned in front of the projector, the optical filter being configured for pixel-selectively adjusting light intensity.

In some embodiments, the processor is further configured for determining a transform from a screen space to the projector space.

In some embodiments, the reference image comprises a patterned image having at least two different colors, the processor being configured for determining the transform based on the reference image.

In some embodiments, the reference image comprises a monochromatic image, the processor being configured for: receiving an acquired image of a screen on which a patterned image is projected by the projector; and determining the transform based on the acquired image.

In some embodiments, the processor is further configured for controlling the camera for capturing the acquired image.

In some embodiments, the processor is further configured for transmitting the reference image to the projector.

In some embodiments, the processor is further configured for controlling the projector for projecting the reference image on the screen.

According to still another broad aspect, there is provided a method for generating a digital filter for adjusting a brightness of a screen, the method being executed by a processor, the method comprising: receiving a captured image of a screen on which a reference image is projected by a projector, the captured image being captured by a camera; applying a spatial frequency filter to the captured image, thereby obtaining a spatially filtered image; determining a screen-space compensation filter based on the spatially filtered image, the screen-space compensation filter being configured for adjusting a brightness of the acquired image; mapping the screen-space compensation filter onto a projector space, thereby obtaining a projector-space compensation filter; and outputting the projector-space compensation filter.

According to still a further broad aspect, there is provided a system for generating a digital filter for adjusting a brightness of a screen, the system comprising: a processor; a non-transitory storage medium operatively connected to the processor, the non-transitory storage medium comprising computer-readable instructions; the processor, upon executing the instructions, being configured to: receive a captured image of a screen on which a reference image is projected by a projector, the captured image being captured by a camera; apply a spatial frequency filter to the captured image, thereby obtaining a spatially filtered image; determine a screen-space compensation filter based on the spatially filtered image, the screen-space compensation filter being configured for adjusting a brightness of the acquired image; map the screen-space compensation filter onto a projector space, thereby obtaining a projector-space compensation filter; and output the projector-space compensation filter.

In some non-limiting implementations, the processor is further configured for controlling the camera for capturing the acquired image.

In some non-limiting implementations, the processor is further configured for transmitting the reference image to the projector.

In some non-limiting implementations, the processor is further configured for controlling the projector for projecting the reference image on the screen.

In some non-limiting implementations, the processor is configured for transmitting the projector-space compensation filter to the projector.

In some non-limiting implementations, the processor is configured for transmitting the projector-space compensation filter to an image generator, the image generator being configured for generating images to be projected by the projector.

In some non-limiting implementations, the processor is configured for transmitting the projector-space compensation filter to an optical filter positioned in front of the projector, the optical filter being configured for pixel-selectively adjusting light intensity.

In some non-limiting implementations, the processor is configured for applying a high pass filter to the captured image.

In some non-limiting implementations, the processor is configured for: determining a first intensity for each pixel of the spatially filtered image, thereby obtaining a first intensity map of the spatially filtered image; determining a greatest negative deviation amongst the first intensities; subtracting the greatest negative deviation from the first intensity map, thereby obtaining a second intensity map of the spatially filtered image; and inverting intensity values of the second intensity map, thereby obtaining the screen-space compensation filter.

In some non-limiting implementations, the processor is configured for: determining a first intensity for each pixel of the spatially filtered image, thereby obtaining a first intensity map of the spatially filtered image; inverting the first intensity of the first intensity map, thereby obtaining a second intensity map for the spatially filtered image; determining a greatest positive deviation within the second intensity map; and subtracting the greatest positive deviation from the second intensity map, thereby obtaining the screen-space compensation filter.

In some non-limiting implementations, the processor is configured for applying a low pass filter to the captured image.

In some non-limiting implementations, the processor is configured for: determining a first intensity for each pixel of the captured image, thereby a first intensity map; determining a second intensity for each pixel of the spatially filtered image, thereby obtaining a second intensity map; determining a greatest positive deviation between the first intensity map and the second intensity map; subtracting the greatest positive deviation from the second intensity map, thereby obtaining a third intensity map; subtracting the third intensity map from the first intensity map, thereby obtaining a fourth intensity map; and inverting intensity values of the fourth intensity map, thereby obtaining the screen-space compensation filter.

In some non-limiting implementations, the reference image comprises a monochromatic image.

In some non-limiting implementations, the processor is further configured for: receiving an acquired image of a screen on which a patterned image is projected by the projector; and determining a transform from a screen space to the projector space based on the acquired image, said the mapping screen-space compensation filter onto the projector space being performed based on the transform.

In some non-limiting implementations, the reference image comprises a patterned image having at least two different colors.

In some non-limiting implementations, the processor is further configured for determining a transform from a screen space to the projector space based on the reference image, said the mapping screen-space compensation filter onto the projector space being performed based on the transform.

According to a further broad aspect, there is provided a method for generating a digital filter for adjusting a brightness of a screen, the method being executed by a processor, the method comprising: receiving a captured image of a screen on which a reference image is projected by a projector, the captured image being captured by a camera; mapping the captured image from a screen space onto a projector space, thereby obtaining a mapped image; applying a spatial frequency filter to the mapped image, thereby obtaining a spatially filtered image; determining a compensation filter based on the spatially filtered image, the compensation filter being configured for adjusting a brightness of the acquired image; and outputting the compensation filter.

According to still another broad aspect, there is provided a system for generating a digital filter for adjusting a brightness of a screen, the system comprising: a processor; a non-transitory storage medium operatively connected to the processor, the non-transitory storage medium comprising computer-readable instructions; the processor, upon executing the instructions, being configured for: receiving a captured image of a screen on which a reference image is projected by a projector, the captured image being captured by a camera; mapping the captured from a screen space onto a projector space, thereby obtaining a mapped image; applying a spatial frequency filter to the mapped image, thereby obtaining a spatially filtered image; determining a compensation filter based on the spatially filtered image, the compensation filter being configured for adjusting a brightness of the acquired image; and outputting the compensation filter.

### Terms and Definitions

In the context of the present specification, a "server" is a computer program that is running on appropriate hardware and is capable of receiving requests (e.g., from computing devices) over a network (e.g., a communication network), and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expressions "at least one server" and "a server".

In the context of the present specification, "computing device" is any computing apparatus or computer hardware that is capable of running software appropriate to the relevant task at hand. Thus, some (non-limiting) examples of computing devices include general purpose personal computers (desktops, laptops, netbooks, etc.), mobile computing devices, smartphones, and tablets, and network equipment such as routers, switches, and gateways. It should be noted that a computing device in the present context is not precluded from acting as a server to other computing devices. The use of the expression "a computing device" does not preclude multiple computing devices being used in receiving/sending, carrying out or causing to be carried out any task or request, or the consequences of any task or request, or steps of any method described herein. In the context of the present specification, a "client device" refers to any of a range of end-user client computing devices, associated with a user, such as personal computers, tablets, smartphones, and the like.

In the context of the present specification, the expression "computer readable storage medium" (also referred to as "storage medium" and "storage") is intended to include non-transitory media of any nature and kind whatsoever, including without limitation RAM, ROM, disks (CD-ROMs, DVDs, floppy disks, hard drivers, etc.), USB keys, solid state-drives, tape drives, etc. A plurality of components may be combined to form the computer information storage media, including two or more media components of a same type and/or two or more media components of different types.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. Thus, information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, unless expressly provided otherwise, an "indication" of an information element may be the information element itself or a pointer, reference, link, or other indirect mechanism enabling the recipient of the indication to locate a network, memory, database, or other computer-readable medium location from which the information element may be retrieved. For example, an indication of a document could include the document itself (i.e. its contents), or it could be a unique document descriptor identifying a file with respect to a particular file system, or some other means of directing the recipient of the indication to a network location, memory address, database table, or other location where the file may be accessed. As one skilled in the art would recognize, the degree of precision required in such an indication depends on the extent of any prior understanding about the interpretation to be given to information being exchanged as between the sender and the recipient of the indication. For example, if it is understood prior to a communication between a sender and a recipient that an indication of an information element will take the form of a database key for an entry in a particular table of a predetermined database containing the information element, then the sending of the database key is all that is required to effectively convey the information element to the recipient, even though the information element itself was not transmitted as between the sender and the recipient of the indication.

In the context of the present specification, the expression "communication network" is intended to include a telecommunications network such as a computer network, the Internet, a telephone network, a Telex network, a TCP/IP data network (e.g., a WAN network, a LAN network, etc.), and the like. The term "communication network" includes a wired network or direct-wired connection, and wireless media such as acoustic, radio frequency (RF), infrared and other wireless media, as well as combinations of any of the above.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Fig. 1 depicts a schematic diagram of a computing device, in accordance with one or more non-limiting implementations of the present technology.
Fig. 2 depicts a schematic diagram of a system for projecting images on a screen while adjusting the brightness of the projected images, in accordance with one or more non-limiting implementations of the present technology.
Fig. 3 depicts a schematic diagram of a first method for generating a projector-space compensation filter, in accordance with one or more non-limiting implementations of the present technology.
Fig. 4 illustrates intensity profiles obtained during a first exemplary generation of the screen-space compensation filter of Fig. 3, in accordance with one or more non-limiting implementations of the present technology.
Fig. 5 illustrates intensity profiles obtained during a second exemplary generation of the screen-space compensation filter of Fig. 3, in accordance with one or more non-limiting implementations of the present technology.
Fig. 6 illustrates intensity profiles obtained during a second exemplary generation of the screen-space compensation filter of Fig. 3, in accordance with one or more non-limiting implementations of the present technology.
Fig. 7A illustrates an exemplary patterned image.
Fig. 7B illustrates an exemplary captured image of a screen on which the exemplary patterned image of Fig. 7A is projected.
Fig. 8A illustrates an exemplary captured image of a reference image projected on a screen.
Fig. 8B is a visual representation of an exemplary screen-space compensation filter obtained from the reference image of Fig. 8A.
Fig. 9 depicts a schematic diagram of a second method for generating a projector-space compensation filter, in accordance with one or more non-limiting implementations of the present technology.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor" or a "graphics processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In one or more non-limiting implementations of the present technology, the processor may be a general-purpose processor, such as a central processing unit (CPU) or a processor dedicated to a specific purpose, such as a graphics processing unit (GPU). Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

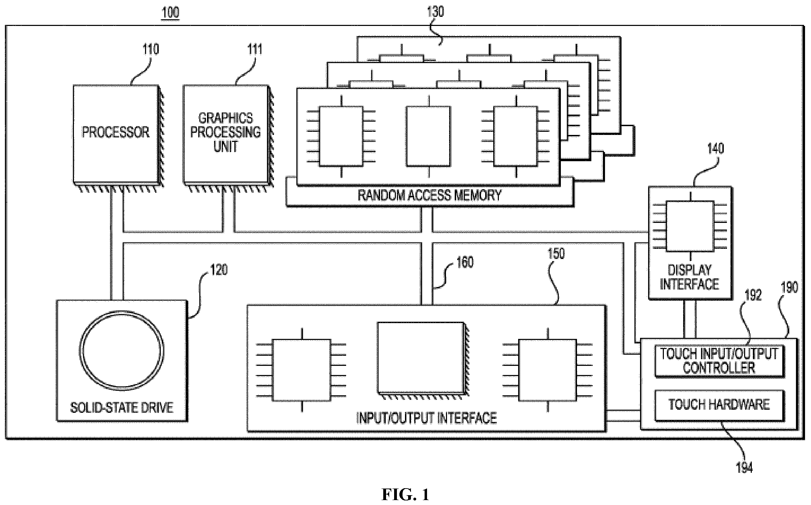

Referring to Fig. 1, there is shown a computing device 100 suitable for use with some implementations of the present technology, the computing device 100 comprising various hardware components including one or more single or multi-core processors collectively represented by processor 110, a graphics processing unit (GPU) 111, a solid-state drive 120, a random-access memory 130, and optionally a display interface 140 and/or an input/output interface 150.

Communication between the various components of the computing device 100 may be enabled by one or more internal and/or external buses 160 (e.g., a PCI bus, universal serial bus, IEEE 1394 "Firewire" bus, SCSI bus, Serial-ATA bus, etc.), to which the various hardware components are electronically coupled.

The input/output interface 150 may be coupled to a touchscreen 190 and/or to the one or more internal and/or external buses 160. The touchscreen 190 may be part of the display. In one or more implementations, the touchscreen 190 is the display. The touchscreen 190 may equally be referred to as a screen 190. In the implementations illustrated in Fig. 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In one or more implementations, the input/output interface 150 may be connected to a keyboard (not shown), a mouse (not shown) or a trackpad (not shown) allowing the user to interact with the computing device 100 in addition or in replacement of the touchscreen 190.

According to implementations of the present technology, the solid-state drive 120 stores program instructions suitable for being loaded into the random-access memory 130 and executed by the processor 110 and/or the GPU 111 for generating a filter for adjusting the brightness of a screen when an image is projected thereon. For example, the program instructions may be part of a library or an application.

The computing device 100 may be implemented as a server, a desktop computer, a laptop computer, a tablet, a smartphone, a personal digital assistant or any device that may be configured to implement the present technology, as it may be understood by a person skilled in the art.

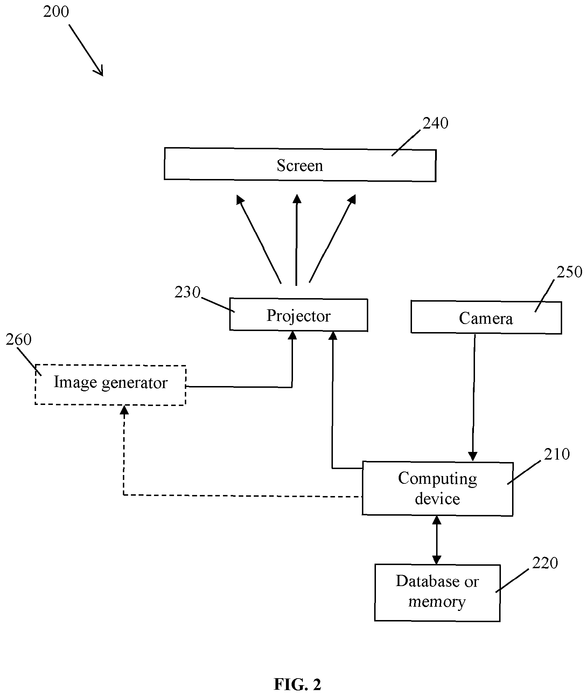

Referring to Figure 2, there is shown a schematic diagram of a system 200, the system 200 being suitable for implementing one or more non-limiting implementations of the present technology. It is to be expressly understood that the system 200 as shown is merely an illustrative implementation of the present technology. Thus, the description thereof that follows is intended to be only a description of illustrative examples of the present technology. This description is not intended to define the scope or set forth the bounds of the present technology. In some cases, what are believed to be helpful examples of modifications to the system 200 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the system 200 may provide in certain instances simple implementations of the present technology, and that where such is the case they have been presented in this manner as an aid to understanding. As persons skilled in the art would understand, various implementations of the present technology may be of a greater complexity.

The system 200 comprises *inter alia* a computing device 210, a database or memory 220, a projector 230, a screen 240, a camera 250 and optionally an image generator 260.

The computing device 210 comprises one or more components of the computing device 100 such as one or more single or multi-core processors collectively represented by processor 110, the graphics processing unit (GPU) 111, the solid-state drive 120, the random-access memory 130, and optionally the display interface 140 and/or the input/output interface 150.

It will be appreciated that the computing device 210 may be implemented as a server, a desktop computer, a laptop, a smartphone and the like.

In implementations in which the computing device 210 comprises a server, it will be appreciated that the server 220 can be implemented as a conventional computer server and may comprise at least some of the features of the computing device 100 shown in Fig. 1. In a non-limiting example of one or more implementations of the present technology, the server is implemented as a server running an operating system (OS). Needless to say that the server may be implemented in any suitable hardware and/or software and/or firmware or a combination thereof. In the disclosed non-limiting implementation of present technology, the server is a single server. In one or more alternative non-limiting implementations of the present technology, the functionality of the server may be distributed and may be implemented via multiple servers (not shown).

The implementation of the server is well known to the person skilled in the art. However, the server comprises a communication interface (not shown) configured to communicate with various entities (such as the database 220, for example and other devices). The server further comprises at least one computer processor (e.g., the processing device of the computing device 100) operationally connected with the communication interface and structured and configured to execute various processes to be described herein.

The computing device 210 is configured to inter alia:
receive a captured image of a screen on which a reference image is projected by a projector, the captured image being captured by a camera;
apply a spatial frequency filter to the captured image, thereby obtaining a spatially filtered image;
determine a projector-space compensation filter based on the spatially filtered image, the projector-space compensation filter being configured for adjusting a brightness of the acquired image; and
output the projector-space compensation filter.

In some implementations, in order to determine the projector-space compensation filter, the computing device 210 is configured to inter alia:
determine a screen-space compensation filter based on the spatially filtered image, the screen-space compensation filter being configured for said adjusting the brightness of the acquired image; and
map the screen-space compensation filter onto a projector space, thereby obtaining the projector-space compensation filter.

In other implementations, in order to determine the projector-space compensation filter, the computing device 210 is configured to inter alia:
map the captured image from a screen space onto a projector space, thereby obtaining a mapped image; and
apply the spatial frequency filter to the mapped image, thereby obtaining the spatially filtered image.

How the computing device 210 is configured to do so will be explained in more detail herein below.

The memory or database 220 is communicatively coupled to the computing device 210 via any adequate communication means such as a communication network, but, in one or more alternative implementations, the database 220 may be directly coupled to the computing device 210 via a direct communication link (such as a Wi-Fi^{™} connection) without departing from the teachings of the present technology. Although the database 220 is illustrated schematically herein as a single entity, it will be appreciated that the database 220 may be configured in a distributed manner, for example, the database 220 may have different components, each component being configured for a particular kind of retrieval therefrom or storage therein.

The database 220 may be a structured collection of data, irrespective of its particular structure or the computer hardware on which data is stored, implemented or otherwise rendered available for use. The database 220 may reside on the same hardware as a process that stores or makes use of the information stored in the database 220 or it may reside on separate hardware, such as on the computing device 210. The database 220 may receive data from the computing device 210 for storage thereof and may provide stored data to the computing device 210 for use thereof.

In one or more implementations of the present technology, the database 230 is configured to store *inter alia*: at least one reference image, at least one patterned image, at least one screen-space compensation filter and/or at least one transform.

The computing device 210 may also be communicatively coupled to the projector 230, the camera 250 and/or the image generator 260 via the telecommunication network or a direct communication link. Similarly, the database 230 may be communicatively coupled to the projector 230, the camera 250 and/or the image generator 260 via the telecommunication network or a direct communication link.

Referring back to Fig. 2, the projector 230 is positioned and configured for projecting images on at least a portion of the screen 240 while the camera 250 is positioned for capturing or acquiring images of the screen 240 while the projector 230 projects an image thereon, i.e., the camera 250 is configured for capturing an image of an image being projected on the screen 240.

In one or more implementations of the present technology in which the system 200 comprises an image generator 260, the system 200 may correspond to a simulation environment such as an aircraft simulator. In this case, the image generator 260 is configured for generating images of the external environment of an aircraft that at least one pilot installed within the aircraft simulator are supposed to see while training.

In one or more implementations of the present technology, the screen 240 is flat or planar. In other implementations of the present technology, the screen 240 is curved and may have a dome-shape.

In one or more implementations of the present technology, the screen 240 is partially transparent and the projector 230 is a rear projector.

In one or more implementations of the present technology, the screen 240 comprises defects that make some sections, portions, pixels or points of an image projected thereon to wrongly appear brighter than its surrounding. Such brighter sections, portions, pixels or points may be apparent to the user of the system resulting in a degraded experience for the user by creating distracting artifacts. The computing device 210 is configured for generating a filter configured for decreasing the brightness the brighter sections, portions, pixels or points of an image projected on the screen 240.

In operation of the system 200, a reference image is projected on the screen 240 by the projector 230, and an image of the screen is captured by the camera 250, i.e., an image of the projected image is captured by the camera 250.

It should be understood that the reference image may be any adequate image. In one or more implementations of the present technology, the reference image may be a monochromatic or single-color image such as a white image, a cyan image, a red image, etc., provided with a same or uniform brightness or intensity for each pixel. In some other implementations of the present technology, the reference image may be an image comprising at least two different colors.

In implementations of the present technology in which the system 200 corresponds to a simulation environment, the camera may be positioned such that the captured image substantial corresponds to what the user of the simulation environment would see while looking at the screen 240. For example, in the case of an aircraft simulator in which a user such as a pilot is seated in front of the screen 240, the camera 250 may be located at a position substantially corresponding to the middle point between the eyes of the user when the user is seated.

The image captured by the camera 250 is transmitted to the computing device 210. As described in greater detail below, the computing device 210 is configured for executing a method for generating a projector-space compensation filter adapted to compensate for the defects of the screen 240 by reducing the brightness of the above-mentioned brighter sections, portions, pixels or points of an image projected on the screen 240.

The projector-space compensation filter is indicative of an intensity reduction value for each pixel of an image to be projected on the screen 240. In some implementations of the present technology, the intensity reduction value is a percentage value by which the intensity of the light associated with a pixel should be reduced. For example, if for a given pixel of an image to be projected on the screen 240, the projector-space compensation filter indicates that the intensity of the light for the given pixel should be reduced by 1.5%, the optical intensity of the light generated by the projector 240 for the given pixel of the image is reduced by 1.5%.

In some implementations of the present technology, the computing device 210 is configured for transmitting the screen-space compensation filter to the projector 230. In this case, the projector 230 is configured for adjusting the amplitude of the light emitted for each corresponding pixel of a projected image based on the screen-space compensation filter. For example, if the screen-space compensation filter indicates that the amplitude of light for a given pixel of the image to be projected should be reduced by 1.5 %, the projector 230 decreases the amplitude of the light corresponding to the given pixel by 1.5%.

In some implementations of the present technology in which the system 200 comprises an image generator 260, the computing device 210 is configured for transmitting the screen-space compensation filter to the image generator 260. The image generator 260 is configured for generating at least one image and transmit the generated image to the projector 230 which then projects the generated image. For each image generated by the image generator 260, a light amplitude value is associated with each pixel of the image, and the image generator 260 is configured for determining the light amplitude value for each pixel of the image based on the screen-space compensation filter. For example, if the screen-space compensation filter indicates that the amplitude of light for a given pixel of the image to be projected should be reduced by 1.5%, the image generator 260 assigns a light amplitude value of -1.5% to the given pixel. The generated image comprising the light amplitude values for each pixel thereof is then transmitted to the projector 230 which projects the received image according to the light amplitude value for each pixel.

In some implementations of the present technology, the system 200 comprises a tunable filter (not shown) positioned in front of the projector 230 and the computing device 210 is configured for transmitting the screen-space compensation filter to the tunable filter. The tunable filter is a substantially transparent filter and comprises points, sections or pixels of which the opacity may be selectively adjusted, i.e. the amount of light that may propagate through each point, section or pixel may be selectively adjusted. For each pixel of an image projected on the screen, there is a respective point, section or pixel of the tunable filter of which the opacity may be selectively controlled so as to control the mount of light propagating through the point, section or pixel. In this case, the tunable filter is positioned in front of the projector 230 so that each point, section or pixel of the tunable filter receives light from the projector 230 that corresponds to a respective pixel of the projected image in order for the tunable filter to modify the image projected by the projector. The tunable filter is configured for adjusting the opacity of each point, section or pixel thereof based on the received projector-space compensation filter. For example, if the projector-space compensation filter indicates that the amplitude of light for a given pixel of the image to be projected should be reduced by 1.5%, the tunable filter adjusts the opacity of its point, section or pixel that corresponds to the given pixel so that only 98.5% of the light incoming of the corresponding point, section or pixel propagates therethrough. In some non-limiting implementation, the tunable filter comprises one of a liquid crystal display, a polarizing filter, a neutral density filter, or the like.

In some implementations of the present technology, the reference image has been previously generated and is stored in a memory of the projector 230.

In some implementations of the present technology in which the system 200 comprises the image generator 260, the reference image is provided to the projector 230 by the image generator 260. In some implementations, the image generator 260 is configured for generating the reference image. In other implementations, the image generator 260 is in communication with the database 220 and is configured to retrieve the reference image from the database 220 before transmitting it to the projector 240.

In other implementations of the present technology, the projector 230 is in communication with the database 220 in which the reference image is stored and the projector 230 is configured to retrieve the reference image from the database 220.

In other implementations of the present technology, the reference image is provided to the projector 230 from the computing device 210. In some implementations, the computing device 210 is configured to generate the reference image. In other implementations, the reference image is stored in the database 220 and the computing device 210 is configured to retrieve the reference image from the database 220 and transmit the reference image to the projector 230.

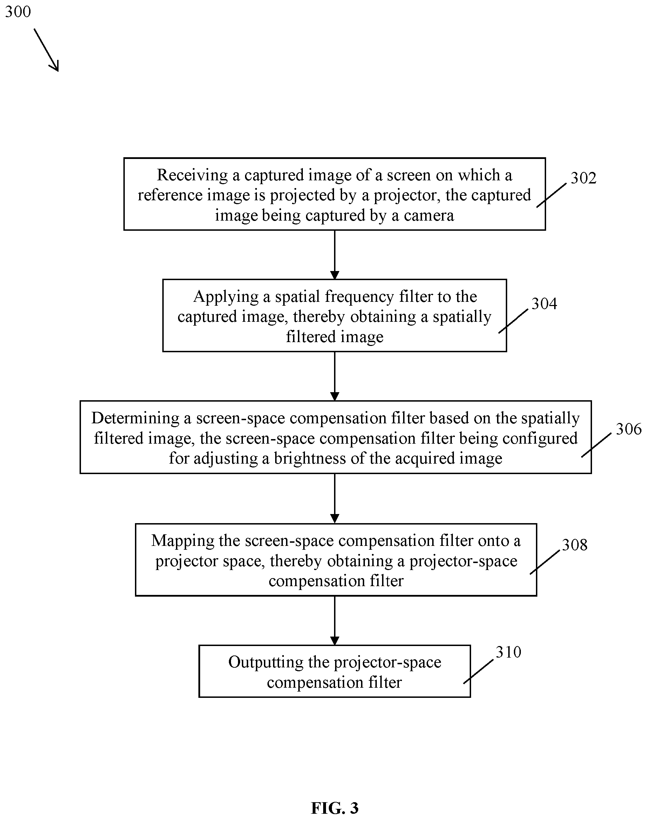

Referring now to Fig. 3, there is described an exemplary method 300 for generating a projector-space compensation filter. It should be understood that the method 300 may be executed by any adequate device, such as the computing device 210, provided with at least one processor or processing unit and a non-transitory memory or storage medium having stored thereon computer-readable instructions and/or statements that when executed by the processor perform the steps of the method 300.

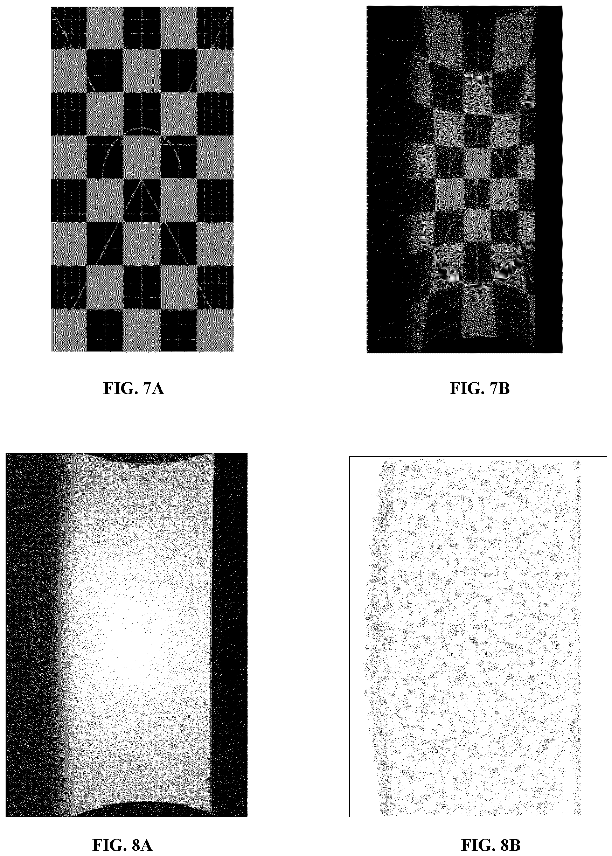

At step 302, the captured image of the screen on which the reference image is projected is received from the camera 250. Fig. 8A illustrates an exemplary captured image obtained when an exemplary white reference image is projected on the screen 240.

At step 304, a spatial frequency is applied to the received captured image, thereby obtaining a spatially filtered image. As described in greater detail below, the spatial frequency filter may be a high-pass frequency filter. In other implementations, the spatial frequency filter may be a low-pass frequency filter.

At step 306, a screen-space compensation filter is determined based on the spatially filtered image using any adequate method. The screen-space compensation filter is indicative of an intensity reduction value for each pixel of the captured image. In some implementations of the present technology, the intensity reduction value is a percentage value by which the intensity of a pixel of the captured image should be reduced. For example, for a given pixel of the captured image, the screen-space compensation filter may indicate that the intensity of the given pixel should be reduced by 1.5%.

Fig. 8B is an exemplary visual representation of a screen-space compensation filter obtained based on the exemplary captured image of Fig. 8A.

In the following, three exemplary methods for generating the screen-space compensation filter are described.

In some implementations in which the spatial frequency filter is a high-pass frequency filter, step 306 comprises the following steps.

First, the intensity for each pixel of the spatially filtered image obtained at step 304 is determined, thereby obtaining a first intensity map or profile for the spatially filtered image. Then, the greatest negative deviation amongst the determined pixel intensities of the spatially filtered image is determined. The determined greatest negative deviation is subtracted from the first intensity map, thereby obtaining a second intensity map or profile for the spatially filtered image, i.e., the determined greatest negative deviation is subtracted from the intensity of each pixel of the spatially filtered image. Finally, the intensity value for each pixel of the second intensity map is inverted, thereby obtaining the screen-space compensation filter.

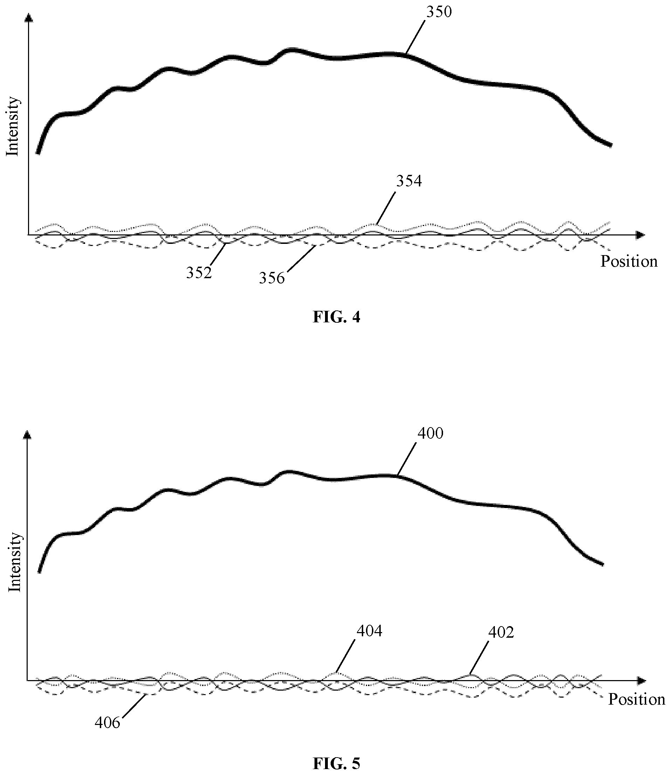

Referring to Fig. 4, curve 350 represents the intensity profile of an acquired image along a line thereof, such as a vertical line or a horizontal line within the acquired image. Curve 352 represents the intensity profile of the same line in the spatially filtered image obtained by applying the high-pass filter to the captured image. Curve 354 represents curve 352 from which the greatest negative deviation has been subtracted, and curve 356 represents curve 354 after inversion thereof. Curve 356 represents the values of the screen-space compensation filter for one line, i.e., for the line for which the curve 350 represents the intensity values.

In other implementations in which the spatial frequency filter is a high-pass frequency filter, step 306 comprises the following steps.

First, the intensity for each pixel of the spatially filtered image obtained at step 304 is determined, thereby obtaining a first intensity map or profile for the spatially filtered image. Then, the intensity value of each pixel of the first intensity map is inverted, thereby obtaining a second intensity map for the spatially filtered image. The greatest positive deviation amongst the determined pixel intensities of the second intensity map is determined. Finally, the greatest positive deviation is subtracted from the second intensity map, thereby obtaining the screen-space compensation filter, i.e., the greatest positive deviation is subtracted from each pixel intensity of the second intensity map.

Referring to Fig. 5, curve 400 represents the intensity profile of an acquired image along a line thereof, such as a vertical line or a horizontal line within the acquired image. Curve 402 represents the intensity profile of the same line in the spatially filtered image obtained by applying the high-pass filter to the captured image. Curve 404 represents curve 402 after inversion thereof. Curve 406 represents curve 404 from which the greatest positive deviation within curve 404 has been subtracted. Curve 406 represents the values of the screen-space compensation filter for one line, i.e., for the line for which the curve 400 represents the intensity values.

In some implementations in which the spatial frequency filter is a low-pass frequency filter, step 306 comprises the following steps.

The intensity for each pixel of the captured image is determined, thereby obtaining an intensity map or profile for the captured image, hereinafter referred to as the first intensity map. The intensity for each pixel of the spatially filtered image is determined, thereby obtaining an intensity map or profile for the spatially filtered image, hereinafter referred to as the second intensity map. Then, the greatest positive deviation between the first intensity map and the second intensity map is determined. The determined greatest positive deviation is subtracted from the second intensity map, thereby obtaining a third intensity map, i.e. the greatest positive deviation is subtracted from the intensity value of each pixel of third intensity map. Finally, the intensity value of each pixel of the third intensity map is inverted, thereby obtaining the screen-space compensation filter.

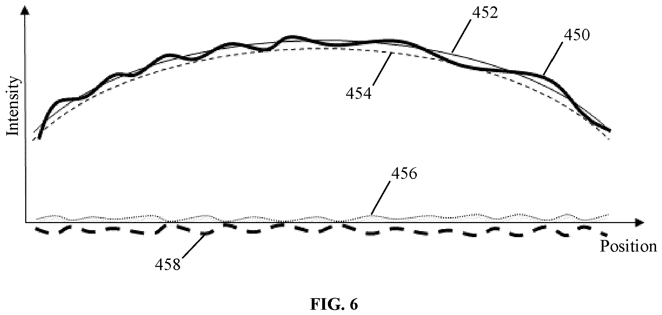

Referring to Fig. 6, curve 450 represents the intensity profile of an acquired image along a line thereof, such as a vertical line or a horizontal line within the acquired image. Curve 452 represents the intensity profile of the same line in the spatially filtered image obtained by applying the low-pass filter to the captured image. Curve 454 represents curve 452 from which the greatest positive deviation between curves 450 and 452 has been subtracted. Curve 456 represents curve 450 from which curve 454 has been subtracted and curve 458 represents curve 456 after inversion.

Referring back to Fig. 3, once it has been determined, the screen-space compensation filter is mapped onto the projector space at step 308, thereby obtaining the projector-space compensation filter. In some implementations of the present technology, a spatial transform or transformation is used for mapping the screen-space compensation filter onto the projector space. The spatial transform is configured to assign for each point or pixel of the screen-space compensation filter having a first position in the screen space a corresponding position in the projector space. By applying the spatial transform to the screen-space compensation filter, each point or pixel of the screen-space compensation filter having an intensity reduction value associated thereto is assigned a corresponding position in the projector space, thereby obtaining the projector-space compensation filter.

At step 310, the projector-space compensation filter is outputted. As described above, the projector-space compensation filter may be stored in memory such as in database 220. In another example, the projector-space compensation filter may be sent to the projector 230, the image generator 230 or a spatial or tunable filter positioned in front of the projector 230.

In some implementations in which the projector-space compensation filter is transmitted to the projector 230, the method 300 comprises a step of controlling the projector 230 to project images, i.e., controlling the projector 230 so that the projector 230 adjusts the amplitude of the light emitted for each corresponding pixel of a projected image based on the screen-space compensation filter and projects the image.

In some implementations in which the projector-space compensation filter is transmitted to an image generator 260, the method 300 further comprises a step of controlling the image generator 260 so that it generates images to be projected based on the projector-space compensation filter, i.e. so that it determines the light amplitude value for each pixel of the image to be projected based on the screen-space compensation filter. The method 300 may further comprises the steps of controlling the image generator 260 to transmit the generated image to the projector 230 and controlling the projector 230 to project the generated image.

In some implementations in which the projector-space compensation filter is transmitted to a tunable filter, the method 300 further comprises a step of controlling the tunable filter, i.e., adjusting the respective opacity of the points, sections or pixels of the tunable filter based on the projector-space compensation filter. The method 300 may further comprise a step of controlling the projector 230 to project images through the tunable filter.

In some implementations of the present technology, the spatial transform to be used for the mapping of the screen-space compensation filter onto the projector space is predetermined and stored in memory such as in the database 220. In this case, the computing device 210 is configured to retrieve the spatial transform from the memory to apply it to the screen-space compensation filter.

In other implementations of the present technology, the computing device 210 is further configured for determining the spatial transform. In this case, an image of a pattern (hereinafter referred to the patterned image) such as the image illustrated in Fig. 7A is projected on the screen 240 by the projector 230. The camera 250 captures an image of the screen 240 while the patterned image is projected thereon. The captured image is illustrated in Fig. 7B. The captured image is sent to the computing device 210 which is configured to determine the spatial transform from the screen space to the projector space based on the reference image and the image of screen 240 while the reference image is projected on the screen 240.

In some implementations, the patterned image comprises a single color. For example, referring to Fig. 7A, the patterned image comprises a set of red squares. The black squares appearing on Fig. 7A correspond to sections of the patterned image to which no color was assigned. In this case, while projecting the image on the screen, the projector generates no light for the sections of the patterned image having no color assigned thereto, and these sections appear as black in the captured image of Fig. 7B.

The patterned image may be stored in memory such as in the database 220, in an internal memory of the projector 230, in an internal memory of the image generator 260.

In some implementations, the computing device 210 may be configured to generate the patterned image.

In some implementations, the image generator 260 may be configured to generate the patterned image.

In some implementations of the present technology, a same image to be projected on the screen 240 (hereinafter referred to as a patterned reference image) is used for both the determination of the spatial transform and the projector-space compensation filter. In some implementations, the patterned reference image comprises a geometrical pattern and at least two different colors.

In some implementations, the step of applying a spatial frequency filter is applied on a first primary color channel of the captured reference image, and the step of mapping the screen-space brightness compensation filter is performed based on a second primary color channel of the captured reference image. In some implementations, the first primary color channel is the green channel.

In some implementations, the steps of applying a spatial frequency filter and generating the screen-space brightness compensation filter is repeated to generate two additional screen-space brightness compensation filters, each of the thusly generated screen-space brightness compensation filters being dedicated to a distinct primary color channel.

In some implementations of the present technology, a same screen may be used to display two distinct images each being projected by a respective projector. For example, when the system corresponds to a simulation environment such as an aircraft simulator, the system may be concurrently used by two users such as two pilots or a pilot and a copilot, each user being located at a different position relative to the screen 240. In this case, a first reference image is projected by the first projector on a first section of the screen associated with the first user, and a second reference image is projected by the second projector on a second section of the screen associated with the second user. It should be understood that the first and second references images may be the same reference image. Alternatively, the first and second reference images may be different images.

An image of the first section of the screen (hereinafter referred to as the first captured image) is captured by a camera while the first reference image is projected on the first section of the screen. An image of the second section of the screen (hereinafter referred to as the second captured image) is captured by a camera while the second reference image is projected on the second section of the screen. It should be understood that two different cameras may be used to capture the two captured images. Alternatively, the two captured images may be successively captured using a same camera. As described above, for each user, the camera may be positioned such that the captured image substantial corresponds to what the user of the system would see while looking at the screen. It should be understood that each captured image is associated with a respective portion of the screen, and therefore also to a respective projector.

The two acquired images are then transmitted to the computing device that is configured to determine a respective projector-space compensation filter for each projector based on a respective spatial transform for each projector, using the above-described method. Each projector-space compensation filter is then sent to is respective projector for adjusting the brightness of images to be projected by each projector. As described above, the projector-space compensation filters may rather be sent to an image generator or spatial or tunable filters each located in front a respective projector.

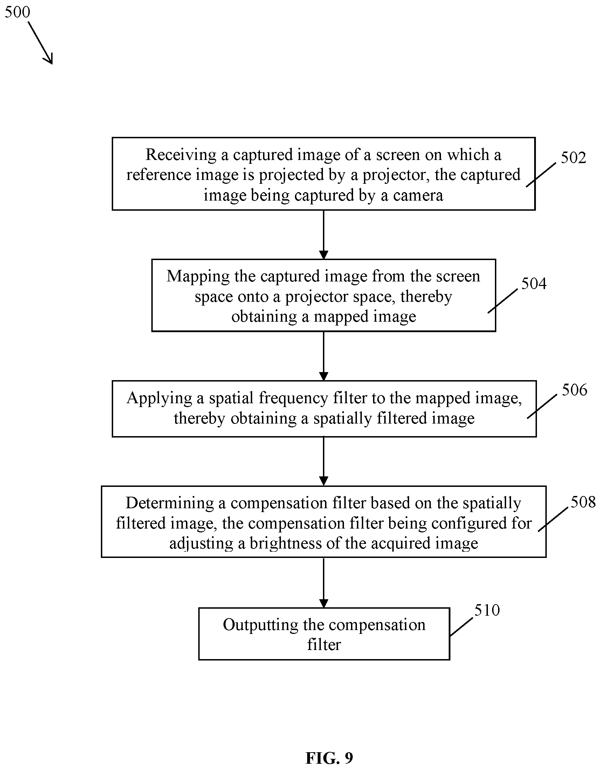

While in the above description, a first compensation filter, i.e. the screen-space compensation filter, is determined in the screen space before being mapped onto the projector space, the person skilled in the art will understand that the captured image may be mapped onto the projector space before determination of a compensation filter, as illustrated in Fig. 9.

Fig. 9 illustrates an exemplary method 500 for generating a projector-space compensation filter. It should be understood that the method 500 may be executed by any adequate device, such as the computing device 210, provided with at least one processor or processing unit and a non-transitory memory or storage medium having stored thereon computer-readable instructions and/or statements that when executed by the processor perform the steps of the method 500.

At step 502, the captured image of the screen on which the reference image is projected is received from the camera 250. It should be understood that step 502 is similar to step 302 described above.

At step 504, the captured image is mapped from the screen space onto the projector space, thereby obtaining a projector-space mapped image, hereinafter referred to as the mapped image.

It should be understood that any method described above for mapping the screen-space compensation filter onto the projector space may be used for mapping the captured image onto the projector space to obtain the mapped image.

At step 506, a spatial frequency filter is applied to the mapped image, thereby obtaining a spatially filtered image.

It should be understood that any above-described method for applying a spatial frequency filter to the captured image may be used for applying the spatial frequency filter to the mapped image.

At step 508, a compensation filter configured for adjusting the brightness of the acquired image is determined based on the spatially filtered image. It should be understood that the compensation filter obtained at step 508 is in the projector space and therefore corresponds to a projector-space compensation filter.

It should be understood that any above-described method for obtaining the screen-space compensation filter may be used for generating the projector-space compensation filter obtained at step 508. For example, any of the methods illustrated in Figs. 4, 5 and 6 may be used at step 508 to obtain the compensation filter.

In some embodiments in which the spatial frequency filter is a high pass filter to the mapped image, a first intensity map of the spatially filtered image is obtained by determining the intensity of each pixel of the spatially filtered image. Then, the greatest negative deviation amongst the first intensities is determined and subsequently subtracted from the first intensity map to obtain a second intensity map for the spatially filtered image. Finally, the projector-space compensation filter is obtained by inverting the intensity values of the second intensity map.

In other embodiments in which the spatial frequency filter is a high pass filter to the mapped image, a first intensity map of the spatially filtered image is obtained by determining the intensity of each pixel of the spatially filtered image. Then, the intensities of the first intensity map are inverted to obtain a second intensity map for the spatially filtered image. The greatest positive deviation within the second intensity map is then determined and subtracting from the second intensity map, thereby obtaining the projector-space compensation filter.

The person skilled in the art will understand that, when the spatial frequency filter is a low-pass frequency filter, the first intensity map or profile is determined based on the mapped image, i.e., based on the captured image once mapped onto the projector space. The intensity of each pixel of the mapped image is determined to obtain a first intensity map. Then, the intensity of each pixel of the spatially filtered image is determined to obtain a second intensity map. The greatest positive deviation between the first intensity map and the second intensity map is determined and subsequently subtracted from the second intensity map to obtain a third intensity map. The third intensity map is subtracted from the first intensity map to obtain a fourth intensity map. Finally, the intensity values of the fourth intensity map are inverted to obtain the projector-space compensation filter.

Finally, the projector-space compensation filter obtained at step 508 is outputted at step 510. Any method for outputting the projector-space compensation filter described above may be used. For example, the compensation filter may be provided to the projector 230, the image generator 260 or a tunable filter positioned in front of the projector 230 in order to adjust the brightness of an image to be projected by the projector 230 on the screen 240.

In some implementations of the present technology, determining the filter compensation prior to mapping onto the projector space allows for obtaining a better accuracy in the adjustment of the brightness of a projected image.

The person skilled in the art will understand that the present technology may be embodied as a computer program product comprising a computer readable memory storing computer executable instructions thereon that when executed by at least one processor perform the steps of the above-described method.

It should be expressly understood that not all technical effects mentioned herein need to be enjoyed in each and every implementation of the present technology. For example, implementations of the present technology may be implemented without the user enjoying some of these technical effects, while other non-limiting implementations may be implemented with the user enjoying other technical effects or none at all.

Some of these steps and signal sending-receiving are well known in the art and, as such, have been omitted in certain portions of this description for the sake of simplicity. The signals can be sent-received using optical means (such as a fiber-optic connection), electronic means (such as using wired or wireless connection), and mechanical means (such as pressure-based, temperature-based or any other suitable physical parameter based).

Modifications and improvements to the above-described implementations of the present technology may become apparent to those skilled in the art. The foregoing description is intended to be exemplary rather than limiting.

## Claims

1. A method for generating a digital filter for adjusting a brightness of a screen, the method being executed by a processor, the method comprising:
receiving a captured image of a screen on which a reference image is projected by a projector, the captured image being captured by a camera;
applying a spatial frequency filter to the captured image, thereby obtaining a spatially filtered image;
determining a projector-space compensation filter based on the spatially filtered image, the projector-space compensation filter being configured for adjusting a brightness of the acquired image; and
outputting the projector-space compensation filter.

2. The method of claim 1, wherein said determining the proj ector-space compensation filter comprises:
determining a screen-space compensation filter based on the spatially filtered image, the screen-space compensation filter being configured for said adjusting the brightness of the acquired image; and
mapping the screen-space compensation filter onto a projector space, thereby obtaining the projector-space compensation filter.

3. The method of claim 2, wherein said applying the spatial frequency filter to the captured image comprises applying a high pass filter to the captured image.

4. The method of claim 3, wherein said determining the screen-space compensation filter comprises one of:
determining a first intensity for each pixel of the spatially filtered image, thereby obtaining a first intensity map of the spatially filtered image; determining a greatest negative deviation amongst the first intensities; subtracting the greatest negative deviation from the first intensity map, thereby obtaining a second intensity map of the spatially filtered image; and inverting intensity values of the second intensity map, thereby obtaining the screen-space compensation filter; and
determining a first intensity for each pixel of the spatially filtered image, thereby obtaining a first intensity map of the spatially filtered image; inverting the first intensity of the first intensity map, thereby obtaining a second intensity map for the spatially filtered image; determining a greatest positive deviation within the second intensity map; and subtracting the greatest positive deviation from the second intensity map, thereby obtaining the screen-space compensation filter.

5. The method of claim 2, wherein said applying the spatial frequency filter to the captured image comprises applying a low pass filter to the captured image.

6. The method of claim 5, wherein said determining the screen-space compensation filter comprises:
determining a first intensity for each pixel of the captured image, thereby a first intensity map; determining a second intensity for each pixel of the spatially filtered image, thereby obtaining a second intensity map; determining a greatest positive deviation between the first intensity map and the second intensity map; subtracting the greatest positive deviation from the second intensity map, thereby obtaining a third intensity map; subtracting the third intensity map from the first intensity map, thereby obtaining a fourth intensity map; and inverting intensity values of the fourth intensity map, thereby obtaining the screen-space compensation filter.

7. The method of claim 1, wherein said applying a spatial frequency filter to the captured image comprises:
mapping the captured image from a screen space onto a projector space, thereby obtaining a mapped image; and
applying the spatial frequency filter to the mapped image, thereby obtaining the spatially filtered image.

8. The method of claim 7, wherein said applying the spatial frequency filter to the mapped image comprises applying a high pass filter to the mapped image.

9. The method of claim 8, wherein said determining the proj ector-space compensation filter comprises one of:
determining a first intensity for each pixel of the spatially filtered image, thereby obtaining a first intensity map of the spatially filtered image; determining a greatest negative deviation amongst the first intensities; subtracting the greatest negative deviation from the first intensity map, thereby obtaining a second intensity map of the spatially filtered image; and inverting intensity values of the second intensity map, thereby obtaining the projector-space compensation filter; and
determining a first intensity for each pixel of the spatially filtered image, thereby obtaining a first intensity map of the spatially filtered image; inverting the first intensity of the first intensity map, thereby obtaining a second intensity map for the spatially filtered image; determining a greatest positive deviation within the second intensity map; and subtracting the greatest positive deviation from the second intensity map, thereby obtaining the projector-space compensation filter.

10. The method of claim 7, wherein said applying the spatial frequency filter to the mapped image comprises applying a low pass filter to the mapped image.

11. The method of claim 10, wherein said determining the projector-space compensation filter comprises:
determining a first intensity for each pixel of the mapped image, thereby a first intensity map; determining a second intensity for each pixel of the spatially filtered image, thereby obtaining a second intensity map; determining a greatest positive deviation between the first intensity map and the second intensity map; subtracting the greatest positive deviation from the second intensity map, thereby obtaining a third intensity map; subtracting the third intensity map from the first intensity map, thereby obtaining a fourth intensity map; and inverting intensity values of the fourth intensity map, thereby obtaining the projector-space compensation filter.

12. The method of any one of claims 1 to 11, wherein said outputting comprises one of:
transmitting the projector-space compensation filter to the projector;
transmitting the projector-space compensation filter to an image generator, the image generator being configured for generating images to be projected by the projector; and
transmitting the projector-space compensation filter to an optical filter positioned in front of the projector, the optical filter being configured for pixel-selectively adjusting light intensity.

13. The method of claim 1, further comprising determining a transform from a screen space to the projector space, wherein the reference image comprises a patterned image having at least two different colors and wherein said determining the transform is performed based on the reference image.

14. The method of claim 1, further comprising determining a transform from a screen space to the projector space wherein the reference image comprises a monochromatic image and wherein said determining the transform comprises:
receiving an acquired image of a screen on which a patterned image is projected by the projector; and
determining the transform based on the acquired image.

15. A system for generating a digital filter for adjusting a brightness of a screen, the system comprising:
a processor;
a non-transitory storage medium operatively connected to the processor, the non-transitory storage medium comprising computer-readable instructions;
the processor, upon executing the instructions, being configured to perform the method steps of any one of claims 1 to 14.

16. A computer program product comprising a computer readable memory storing computer executable instructions thereon that when executed by at least one processor perform the method steps of any one of claims 1 to 14.
